# EUROPEAN PATENT APPLICATION

(11) **EP 2 770 087 A1**
(43) Date of publication of application: **27.08.2014**
(21) Application number: 14155052.5
(22) Date of filing: 13.02.2014
(51) Int. Cl.: C25D 3/38

(54) **Electroplating bath**

(30) Priority: 25.02.2013 US 201313776692
(71) Applicant: Rohm and Haas Electronic Materials LLC, Marlborough, MA 01752 (US); Dow Global Technologies LLC, Midland, MI 48674 (US)
(72) Inventor: Li, Tina C., Warrenville, IL 60555 (US); Mikkola, Robert D., Marlborough, MA 01752 (US); Laitar, David S., Midland, MI 48642 (US); Romer, Duane R., Midland, MI 48642 (US)
(74) Representative: Buckley, Guy Julian

(57) **Abstract**

Compositions suitable for the electrodeposition of copper on substrates, such as electronic device substrates, are provided. Methods of depositing copper layers on surfaces and filling apertures with copper are also provided.

## Description

This invention relates generally to the field of electroplating. In particular, this invention relates to the electrodeposition of copper on substrates.

Copper is used in the manufacture of many electronic devices. Electroplating is a common method of depositing copper on electronic device substrates, which generally involves passing a current between two electrodes in a plating solution where one of the electrodes is the article to be plated (typically the cathode). A typical acid copper electroplating solution comprises dissolved copper (usually copper sulfate), an acid electrolyte in an amount sufficient to impart conductivity to the bath, and one or more additives to improve the quality of the copper deposit. Such additives include brighteners, levelers, surfactants and suppressors.

Plating a substrate having irregular topography, such as small recessed features, can pose particular difficulties. During electroplating a voltage drop variation typically exists along an irregular surface which can result in an uneven metal deposit. Plating irregularities are exacerbated where the voltage drop variation is relatively extreme, i.e., where the surface irregularity is substantial. As a result, a thicker metal deposit, termed overplating, is observed over such surface irregularities. Achieving a metal layer of substantially uniform thickness is frequently a challenging step in the manufacture of plated articles such as electronic devices. Leveling agents are often used in metal plating baths, particularly copper plating baths, to provide substantially uniform, or level, metal layers on a substrate surface.

The purity of an electrolytically deposited metal layer such as copper becomes important as the size of the electronic devices shrink. High levels of impurities in narrow interconnect lines will increase the resistivity of the metal as well as decrease the useful lifetime of a device by early electro-migration failure. Accordingly, the trend in the industry is toward metal plating baths, particularly copper electroplating baths that provide purer copper deposits inside narrow interconnect lines in order to reduce the resistivity of the deposits and promote longer electro-migration lifetimes.

The industry continues to look for additives, such as levelers, for copper electroplating baths that provide improved performance but that do not significantly impart impurities to the resulting copper deposit. Polyethyleneimines are known additives for copper electroplating baths. International Pat. App. No. WO 2011/113908 discloses copper electroplating baths containing alkoxylated polyalkyleneimines having a polyalkyleneimine backbone having a molecular weight of 300 to 1,000,000 g/mol and substituted with a polyoxyalkylene radical wherein the average number of oxyalkylene units in the polyoxyalkylene radical is from 1.5 to 10. This patent application teaches that a low degree of alkoxylation leads to a high nitrogen content in the additive. A sufficiently high nitrogen content is responsible for good leveling performance on substrates with micrometer (µm) or nanometer (nm) sized features. However, this patent teaches that when the nitrogen content in the additive is too high, formation of defects, such as voids, occurs in sub-µm features, and particularly in sub-100-nm features. This patent application teaches that an average number of oxyalkylene units in the polyoxyalkylene radical of from 1.5 to 10 still exhibits good leveling performance without the formation of added defects, particularly in apertures of 100 nm diameter and smaller.

The inventors have surprisingly found that alkoxylated polyalkyleneimines having a higher nitrogen content than conventional alkoxylated polyalkyleneimine additives can be used in a copper electroplating bath to provide level copper deposits and fill apertures, particularly < 100 nm diameter apertures, with copper that is substantially free of defects, such as voids.

The present invention provides a copper electroplating bath composition comprising: a source of copper ions; an electrolyte; and an alkoxylated polyalkyleneimine additive comprising a polyalkyleneimine backbone having a molecular weight of 200 to 1,000,000 g/mol and nitrogen atoms substituted with a polyoxyalkylene radical having an average number of oxyalkylene units in the polyoxyalkylene radical of from 0.2 to 1.49.

Also provided by the present invention is a method of electroplating copper on a substrate comprising: providing an electronic device substrate to be plated with copper; contacting the substrate with the composition described above; and applying sufficient current density to deposit a layer of copper on the substrate.

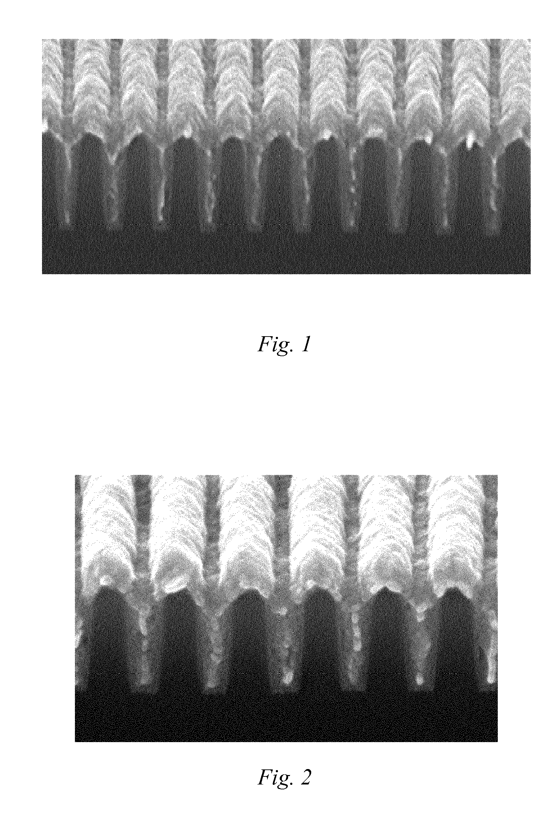

Figs. 1 and 2 are scanning electron micrographs (SEMs) showing copper deposited into 60 nm trenches having an aspect ratio of 5 according to the present invention.

As used throughout this specification, the following abbreviations shall have the following meanings, unless the context clearly indicates otherwise: A = amperes; A/dm² = amperes per square decimeter; mA/cm² = milliamps per square centimeter; V = volts; mV = millivolts; °C = degrees Centigrade; g = gram; mg = milligram; ppm = parts per million; Å = angstroms; nm = nanometers; µm = micron = micrometer; mm = millimeters; cm = centimeters; DI = deionized; L = liter; and mL = milliliter. All amounts are percent by weight and all ratios are molar ratios, unless otherwise noted. All numerical ranges are inclusive and combinable in any order, except where it is clear that such numerical ranges are constrained to add up to 100%.

As used throughout the specification, "feature" refers to the geometries on a substrate. "Apertures" refer to recessed features including trenches and vias. As used throughout this specification, the term "plating" refers to metal electroplating. "Deposition" and "plating" are used interchangeably throughout this specification. "Halide" refers to fluoride, chloride, bromide and iodide. Unless otherwise specified, the term "alkyl" includes linear, branched and cyclic alkyl. "Accelerator" refers to an organic additive that increases the plating rate of the electroplating bath. A "suppressor" refers to an organic additive that suppresses the plating rate of a metal during electroplating. "Leveler" refers to an organic compound that is capable of providing a substantially level (or planar) metal layer. The terms "leveler" and "leveling agent" are used interchangeably throughout this specification. The articles "a" and "an" refer to the singular and the plural.

The plating bath and method of the present invention are useful in providing a substantially level plated copper layer on a substrate, such as a semiconductor wafer. Also, the present invention is useful in filling apertures with copper, such as filling through-silicon-vias (TSVs). The present compositions and methods are particularly suitable for depositing copper in apertures having a dimension of < 100 nm. Such filled apertures are substantially free of voids. As used herein, the term "substantially free of voids" means that > 95% of the filled apertures are free of voids. It is preferred that ≥ 97% of the filled apertures are free of voids, more preferably that ≥ 98% of the filled apertures are free of voids, and even more preferably the filled apertures are void-free. The present invention is useful in depositing copper in apertures having a variety of aspect ratios, such as from 1 to 10 or greater, and is particularly useful for filling apertures having an aspect ratio of 3 to 8.

A wide variety of copper electroplating baths may be used with the present invention. Copper electroplating baths typically contain a source of copper ions, an electrolyte, and an alkoxylated polyalkyleneimine additive comprising a polyalkyleneimine backbone having a molecular weight of 200 to 1,000,000 g/mol, and wherein the polyalkyleneimine backbone is substituted with a polyoxyalkylene radical wherein the average number of oxyalkylene units in the polyoxyalkylene radical is from 0.2 to 1.49. The alkoxylated polyalkyleneimine functions as a leveling agent in the present compositions. Optionally, the electroplating baths may contain one or more of various other additives, such as water, accelerators, suppressors, additional leveling agents, sources of halide ions, grain refiners, defoaming agents, alloying metals, and mixtures thereof. Preferably, the present copper electroplating baths further comprise one or more accelerators, one or more suppressors and one or more sources of halide ion.

Copper salts are typically used as the source of copper ions in copper electroplating baths. Any copper salt that is soluble in the composition may suitably be used. Exemplary copper salts include, but are not limited to, copper sulfate, copper sulfonate, copper acetate, copper gluconate, copper fluoroborate, copper halides, cupric nitrate, copper alkanesulfonates and copper arylsulfonates. Suitable copper alkanesulfonates include copper methane sulfonate, copper ethanesulfonate, and copper propanesulfonate. Suitable copper arylsulfonates include copper benzenesulfonate, copper toluenesulfonate, and copper phenolsulfonate. Copper sulfate and copper alkanesulfonates are particularly preferred copper salts. Mixtures of copper salts may also be used. Such copper salts are generally commercially available. The copper salt may be used in the present electroplating baths in a relatively wide concentration range. Typically, the copper salt is present in an amount sufficient to provide an amount of copper ion of 10 to 180 g/L in the plating bath. More typically, the amount of copper salt provides 15 to 70 g/L of copper ions in the plating bath.

The electrolyte may be alkaline or acidic and is typically acidic. Any acid which is compatible with the source of copper ions may be used in the present invention. Suitable acids include, but are not limited to: sulfuric acid; acetic acid; fluoroboric acid; nitric acid; sulfamic acid; phosphoric acid; hydrogen halide acids such as hydrochloric acid; alkanesulfonic acids and arylsulfonic acids such as methanesulfonic acid, ethanesulfonic acid, propanesulfonic acid, toluenesulfonic acid, phenolsulfonic acid and benzenesulfonic acid; and halogenated acids such as trifluoromethylsulfonic acid and haloacetic acids such as trifluoroacetic acid. Preferably, the electrolyte is chosen from sulfuric acid, alkanesulfonic acids, and arylsulfonic acids. Mixtures of acids may be used as the electrolyte. In general, the electrolyte is present in an amount sufficient to impart conductivity to the electroplating bath. The pH of the acidic electrolyte of the present invention has a value of less than 7, and typically less than 2. Exemplary alkaline electroplating baths use pyrophosphate as the electrolyte, although other electrolytes may be employed. It will be appreciated by those skilled in the art that the pH of the electrolyte may be adjusted if necessary by any suitable methods. Such electrolytes are generally commercially available and may be used as received, or may be further purified.

The total amount of acid electrolyte used in the present electroplating baths may be from 0 to 200 g/L, preferably from 5 to 200 g/L, and more preferably from 0 to 120 g/L, although higher amounts of acid may be used for certain applications, such as up to 225 g/L or even 300 g/L. It will be appreciated by those skilled in the art that by using copper sulfate, a copper alkanesulfonate or a copper arylsulfonate as the copper ion source, an acidic electrolyte can be obtained without any added acid, or by using a reduced amount of added acid.

In general, the copper electroplating baths also contain water. The water may be present in a wide range of amounts. Any type of water may be used, such as distilled, DI or tap.

Alkoxylated polyalkyleneimine additives useful in the present electroplating baths comprise a polyalkyleneimine backbone having a molecular weight of 200 to 1,000,000 g/mol and comprising nitrogen atoms substituted with a polyoxyalkylene radical having an average number of oxyalkylene units in the polyoxyalkylene radical of from 0.2 to 1.49. Preferably, the average number of oxyalkylene units in the polyoxyalkylene radical of from 0.3 to 1.45, more preferably from 0.3 to 1.4, still more preferably from 0.3 to 1.25, yet more preferably from 0.3 to 1, and even more preferably from 0.3 to 0.75. As used herein, the term "average number of oxyalkylene units" refers to the degree of alkoxylation in the polyalkyleneimine and means the number of alkoxy groups R¹-O averaged over the polyoxyalkylene units per N-H group in the polyalkyleneimine backbone, e.g., a number of 1 means that there is an average of one alkoxy group per N-H group in the polyalkyleneimine polymer.

Preferably, the alkoxylated polyalkyleneimine has the formula:

(E'₂N-R)ₐ(N(E¹)-R)_{b}(N(A¹)-R)₄N(A²)-R)_{d}NE¹2

wherein R is a C₂₋₆alkanediyl; A¹ is a continuation of the polyalkyleneimine backbone; A² is chosen from alkyl, alkenyl, alkynyl, alkaryl and mixtures thereof; E¹ is a polyoxyalkylene unit of the formula -(R¹O)ₚR²; each R¹ is independently chosen from ethanediyl, 1,2-propanediyl, (2-hydroxymethyl)ethanediyl, 1,2-butanediyl, 2,3-butanediyl, 2-methyl-1,2-propanediyl, 1-pentanediyl, 1,2-pentaediyl, 2-methyl-1,2-butanediyl, 3-methyl-1,2-butanediyl, 2,3-hexanediyl, 3,4-hexanediyl, 2-methyl-1,2-pentanediyl, 2-ethyl-1,2-butanediyl, 3-methyl-1,2-pentanediyl, 1,2-decanediyl, 4-methyl-1,2-pentanediyl, and (2-phenyl)ethanediyl; each R² is independently chosen from H, alkyl, alkenyl, alkynyl, alkaryl, and aryl; p is a number from 0.2 to 1.49; a, b, c and d are integers and a + b + c + d = 10 to 24000. Preferably, R is chosen from ethanediyl, 1,2-propanediyl, and mixtures thereof. R² is preferably H. It is preferred that p = 0.3 to 1.45, more preferably from 0.3 to 1.4, still more preferably from 0.3 to 1.25, even more preferably from 0.3 to 1, and yet more preferably from 0.3 to 0.75. Preferably, d = 0. It is preferred that a, b and c are each in a ratio of 1:3 to 3:1, and more preferably 1:2 to 2:1. It is preferred that a + b + c + d = 15 to 10000, more preferably 20 to 5000, and yet more preferably 25 to 65 or 1000 to 1800. The average number of oxyalkylene units per N-H group in the polyalkyleneimine backbone is represented by "p".

Alkoxylated polyalkyleneimines may be prepared by reacting a polyalkyleneimine with one or more suitable alkylene oxides. Suitable alkylene oxides include, without limitation, ethylene oxide, propylene oxide, butylene oxide such as 1,2-butylene oxide and, 2,3-butylene oxide, pentylene oxide and hexylene oxide. Mixtures of alkylene oxides may be used. Preferred alkylene oxides include ethylene oxide, propylene oxide, butylene oxide and mixtures thereof, more preferably ethylene oxide, butylene oxide, ethylene oxide/propylene oxide and ethylene oxide/butylene oxide, and yet more preferably ethylene oxide/butylene oxide. Preferred alkylene oxide mixtures are those including ethylene oxide, such as ethylene oxide and propylene oxide mixtures and ethylene oxide and butylene oxide mixtures. When a mixture of 2 alkylene oxides is used, the alkylene oxides may be used in any weight ratio, such as 99:1 to 1:99. A particular useful alkylene oxide mixture is ethylene oxide/butylene oxide in a weight ratio of 40:60 to 60:40. In the present alkoxylated polyalkyleneimines, the ratio of the total weight of the one or more alkylene oxides to the weight of the polyalkyleneimine (weight ratio) is typically ≤ 2:1, preferably from 0.01:1 to 2:1, more preferably from 0.05:1 to 2:1, still more preferably from 0.05:1 to 1.5:1, and yet more preferably from 0.25:1 to 1.5:1. When higher weight ratios of alkylene oxide to polyalkyleneimine are used, the average number of alkoxy groups per N-H group in the polyalkyleneimine backbone increases. For example, when an alkylene oxide to polyalkyleneimine weight ratio of 5:1 is used, the average number of alkoxy groups per N-H group in the polyalkyleneimine backbone is about 3 or slightly greater.

A wide variety of polyalkyleneimines may be used to prepare the present alkoxylated polyalkyleneimines. Such polyalkyleneimines typically have a lower molecular weight of 200 g/mol, preferably 300 g/mol, and more preferably 600 g/mol. The upper limit of the molecular weight (M_{w}) is generally 1,000,000 g/mol, preferably 750,000 g/mol, more preferably 200,000 g/mol, most preferably 100,000 g/mol. A preferred range of molecular weights of the polyalkyleneimine backbone is from 600 to 10,000 g/mol. It is preferred that the polyalkyleneimine is polyethyleneimine. Suitable polyalkyleneimines are commercially available, such as from BASF (Ludwigshafen, Germany), or may be prepared by methods known in the literature, for example, U.S. Pat. No. 2,182,306.

The alkoxylation of the polyalkyleneimines can be performed by a variety of methods known in the art, such as that described in Int. Pat. App. No. WO 2011/113908. The modification of the N-H units in the polyalkyleneimine backbone with alkylene oxide units is carried out, for instance, by first reacting the polymer, preferably polyethyleneimine, with one ore more alkylene oxides in the presence of up to 80 percent by weight of water at a temperature of from 25 to 150 °C in an autoclave fitted with a stirrer. In the first step of the reaction, the alkylene oxide is added in such an amount that some hydrogen atoms of the N-H-groups of the polyalkyleneimine are converted into hydroxyalkyl groups to give monoalkoxylated polyalkyleneimine. The water is then removed from the autoclave. After the addition of a basic catalyst, for example sodium methylate, potassium tertiary butylate, potassium hydroxide, sodium hydroxide, sodium hydride, potassium hydride or an alkaline ion exchanger, in an amount of 0.1 to 15 percent by weight with reference to the addition product obtained in the first step of the alkoxylation, further amounts of alkylene oxide are added to the reaction product of the first step so that an alkoxylated polyalkyleneimine is obtained which contains 0.2 to 1.49, preferably 0.3 to 1.45, more preferably 0.3 to 1.4, still more preferably from 0.3 to 1.25, even more preferably from 0.3 to 1, and yet more preferably 0.3 to 0.75 alkylene oxide units per N-H group of the polymer. The second step is carried out for instance at temperatures of from 60 to 150 °C. The second step of the alkoxylation may be carried out in an organic solvent such as xylene or toluene. For the correct metered addition of the alkylene oxides, it is advisable, before the alkoxylation, to determine the number of primary and secondary amine groups of the polyalkyleneimine. Alternatively, alkoxylation of the polyalkyleneimines can be peroformed by first reacting a polyalkyleneimine, such as polyethyleneimine, with a suitable base, such as potassium hydride or sodium hydride, in a suitable solvent, such as tetrahydrofuran, with heating, such as to 80 °C. Next, the desired alkylene oxide (epoxide) is added, with further heating, such as up to 130 °C.

Optionally, the alkoxylated polyalkyleneimines can be functionalized in a further reaction step. A further functionalization can serve to modify the properties of the alkoxylated polyalkyleneimines. To this end, the hydroxyl groups and/or amino groups present in the alkoxyalkylated polyalkyleneimines are converted by means of suitable agents, which are capable of reaction with hydroxyl groups and/or amino groups. This forms functionalized polyalkoxylated polyalkylenepolyamines. It is preferred that the alkoxylated polyalkyleneimines are not further functionalized. The leveling agents of the present invention may possess any suitable molecular weight polydispersity. The present leveling agents work over a wide molecular weight polydispersity range.

The alkoxylated polyalkyleneimines may be used in the present copper electroplating baths in a range of amounts. Typically, the alkoxylated polyalkyleneimine is present in the composition in a concentration of ≤ 10 mg/L, preferably in a concentration of 0.0001 to 10 mg/L, more preferably from 0.001 to 5 mg/L, and yet more preferably from 0.001 to 1 mg/L. Mixtures of alkoxylated polyalkyleneimines may be used. The total concentration of any such mixture alkoxylated polyalkyleneimine leveling agents in the copper electroplating bath is ≤1 mg/L, preferably in a concentration of 0.0001 to 10 mg/L, more preferably from 0.0001 to 5 mg/L, and even more preferably from 0.001 to 5 mg/L.

The present plating baths preferably contain an accelerator. Any accelerators (also referred to as brightening agents) are suitable for use in the present invention. Such accelerators are well-known to those skilled in the art. Typical accelerators contain one or more sulfur atoms and have a molecular weight of 1000 or less. Accelerator compounds that have sulfide and/or sulfonic acid groups are generally preferred, particularly compounds that include a group of the formula R'-S-R-SO₃X, where R is optionally substituted alkyl, optionally substituted heteroalkyl, optionally substituted aryl, or optionally substituted heterocyclic; X is a counter ion such as sodium or potassium; and R' is hydrogen or a chemical bond. Typically, the alkyl groups are C₁₋₁₆alkyl and preferably C₃₋₁₂alkyl. Heteroalkyl groups typically have one or more heteroatoms, such as nitrogen, sulfur or oxygen, in the alkyl chain. Suitable aryl groups include, but are not limited to, phenyl, benzyl, biphenyl and naphthyl. Suitable heterocyclic groups typically contain from 1 to 3 heteroatoms, such as nitrogen, sulfur or oxygen, and 1 to 3 separate or fused ring systems. Such heterocyclic groups may be aromatic or non-aromatic. Preferred accelerators include: N,N-dimethyl-dithiocarbamic acid-(3-sulfopropyl)ester; 3-mercapto-propylsulfonic acid-(3-sulfopropyl)ester; 3-mercapto-propylsulfonic acid sodium salt; carbonic acid-dithio-o-ethylester-s-ester with 3-mercapto-1-propane sulfonic acid potassium salt; bis-sulfopropyl disulfide; 3-(benzothiazolyl-s-thio)propyl sulfonic acid sodium salt; pyridinium propyl sulfobetaine; 1-sodium-3-mercaptopropane-1-sulfonate; N,N-dimethyl-dithiocarbamic acid-(3-sulfoethyl)ester; 3-mercapto-ethyl propylsulfonic acid-(3-sulfoethyl)ester; 3-mercapto-ethylsulfonic acid sodium salt; carbonic acid-dithio-o-ethylester-s-ester with 3-mercapto-1-ethane sulfonic acid potassium salt; bis-sulfoethyl disulfide; 3-(benzothiazolyl-s-thio)ethyl sulfonic acid sodium salt; pyridinium ethyl sulfobetaine; and 1-sodium-3-mercaptoethane-1-sulfonate.

Such accelerators may be used in a variety of amounts. In general, accelerators are used in an amount of at least 0.01 mg/L (ppm), based on the bath, preferably at least 0.5 mg/L, and more preferably at least 1 mg/L. For example, the accelerators are present in an amount of from 0.01 mg/L to 300 mg/L. The particular amount of accelerator can be easily determined by one skilled in the art, and will depend upon the specific application, such as the dimensions of the apertures to be filled, and the density of such apertures in the substrate to be plated.

Any compound capable of suppressing the copper plating rate may be used as a suppressor in the present electroplating baths. Suitable suppressors include, but are not limited to, polymeric materials, particularly those having heteroatom substitution, and more particularly oxygen substitution. Exemplary suppressors are high molecular weight polyethers, such as those of the formula R-O-(CXYCX'Y'O)ₙR' where R and R' are independently chosen from H, C₂₂₀alkyl group and C₆₋₁₀aryl group; each of X, Y, X' and Y' is independently selected from hydrogen, alkyl such as methyl, ethyl or propyl, aryl such as phenyl, or aralkyl such as benzyl; and n is an integer from 5 to 100,000. Typically, one or more of X, Y, X' and Y' is hydrogen. Preferred suppressors include commercially available polypropylene glycol copolymers and polyethylene glycol copolymers, including ethylene oxide-propylene oxide ("EO/PO") copolymers and butyl alcohol-ethylene oxide-propylene oxide copolymers. Suitable butyl alcohol-ethylene oxide-propylene oxide copolymers are those having a weight average molecular weight of 500 to 10,000, and preferably 1000 to 10,000. Other exemplary suppressors are tetrafunctional polyethers derived from the addition of different alkylene oxides to ethylenediamine, and are represented by formulae 1 and 2: 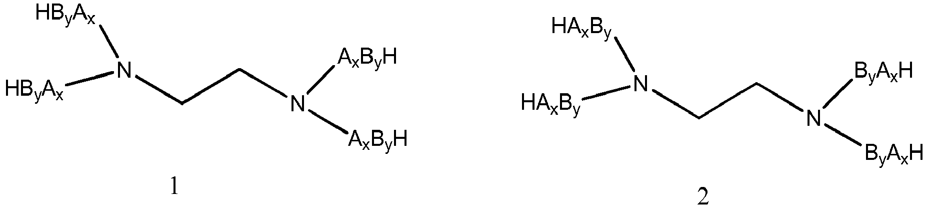 where A and B represent different alkyleneoxy moieties, and x and y are represent the number of repeat units of each alkylene oxide, respectively. Preferably, A and B are chosen from C₂₋₄ alkylene oxides, and more preferably from propylene oxide and ethylene oxide. The alkyleneoxy moieties in the compounds of formulae 1 and 2 may be in block, alternating or random arrangements. Suitable suppressor materials are commercially available from a variety of sources, such as from BASF under the PLURONIC and TETRONIC brands. When such suppressors are used, they are typically present in an amount in the range of from 1 to 10,000 ppm based on the weight of the bath, and preferably from 5 to 10,000 ppm.

Optionally, the present electroplating baths may contain one or more second leveling agents. Such second leveling agents may be any conventional leveling agent. Suitable conventional leveling agents that can be used in combination with the present leveling agents include, without limitations, those disclosed in U.S. Pat. Nos. 6,610,192 (Step et al.), 7,128,822 (Wang et al.), 7,374,652 (Hayashi et al.), 6,800,188 (Hagiwara et al.), 8,262,895 (Niazimbetova et al.), 8,268,157 (Niazimbetova), and 8,268,158 (Niazimbetova et al.). Preferred second leveling agents include reaction products of imidazoles with epoxides, such as those found in U.S. Pat. No. 8,268,158. The amount of such second leveling agent is within the ability of those skilled in the art, and is typically used in an amount of from 0.01 ppm to 5000 ppm based on the total weight of the plating bath, although greater or lesser amounts may be used. Preferably, the total concentration of the second leveling agent is from 0.25 to 5000 ppm and more typically from 0.25 to 1000 ppm and still more preferably from 0.25 to 100 ppm. In one embodiment, it is preferred that the present copper electroplating baths do not contain a second leveling agent.

The present electroplating baths may optionally contain a source of halide ions, and preferably contain a source of halide ions. Chloride ions are the preferred halide ions. Exemplary chloride ion sources include copper chloride and hydrochloric acid. A wide range of halide ion concentrations may be used in the present invention. Typically, the halide ion concentration is in the range of from 0 to 100 ppm based on the plating bath, and preferably from 10 to 100 ppm. A more preferable concentration of halide ion is from 20 to 75 ppm. Such halide ion sources are generally commercially available and may be used without further purification.

One or more sources of alloying metals may optionally be present in the copper electroplating baths. Exemplary alloying metals include, but are not limited to, tin, zinc, indium, antimony, bismuth, and the like. Such alloying metals are added to the electroplating baths in the form of any suitable bath-soluble salt. Thus, the copper electroplating baths useful in the present invention may deposit copper or a copper alloy, such as tin-copper and tin-copper-bismuth. The amount of such source of alloying metal in the plating bath depends on the particular metal selected and on the particular alloy to be deposited. Such amounts are well-known to those skilled in the art.

The electroplating baths of the present invention are typically aqueous. Unless otherwise specified, all concentrations of components are in an aqueous system. Particularly suitable compositions useful as electroplating baths in the present invention include a soluble copper salt, an acid electrolyte, an accelerator, a suppressor, halide ion and an alkoxylated polyalkyleneimine described above as a leveling agent. More preferably, suitable compositions include 10 to 220 g/L of a soluble copper salts as copper metal, 5 to 250 g/L of acid electrolyte, 1 to 50 mg/L of an accelerator, 1 to 10,000 ppm of a suppressor, 10 to 100 ppm of a halide ion, 0.0001 to 1 mg/L of an alkoxylated polyalkyleneimine described above, optionally 0.01 ppm to 5000 ppm of a second leveler, with the balance being water to prepare 1L.

The electroplating baths of the present invention may be prepared by combining the components in any order. It is preferred that the inorganic components such as source of copper ions, water, electrolyte and optional halide ion source, are first added to the plating bath vessel followed by the organic components such as leveling agent, accelerator, suppressor, and any other organic component.

The plating baths of the present invention may be used at any suitable temperature, such as from 10 to 65 °C or higher. Preferably, the temperature of the plating baths is from 10 to 35 °C and more preferably from 15 to 30 °C.

In general, the present copper electroplating baths are agitated during use. Any suitable agitation method may be used with the present invention and such methods are well-known in the art. Suitable agitation methods include, but are not limited to, air sparging, work piece agitation, and impingement. When the present copper electroplating baths are used to plate a substrate such as a semiconductor wafer, the wafer may be rotated at a suitable rate, such as from 1 to 1000 rpm, preferably from 1 to 250 rpm and more preferably at 200 rpm, and the plating bath composition contacts the rotating wafer, such as by pumping or spraying. In the alternative, the wafer need not be rotated where the flow of the plating bath is sufficient to provide the desired metal deposit.

As used herein, the term "semiconductor wafer" is intended to encompass "an electronic device substrate," "a semiconductor substrate," "a semiconductor device," and various packages for various levels of interconnection, including a single-chip wafer, multiple-chip wafer, packages for various levels, or other assemblies requiring solder connections. Particularly suitable substrates are patterned wafers, such as patterned silicon wafers, patterned sapphire wafers and patterned gallium-arsenide wafers. Such wafers may be any suitable size. Preferred wafer diameters are 200 mm to 300 mm, although wafers having smaller and larger diameters may be suitably employed according to the present invention. As used herein, the term "semiconductive substrates" includes any substrate having one or more semiconductor layers or structures which include active or operable portions of semiconductor devices. The term "semiconductor substrate" is defined to mean any construction comprising semiconductive material, including but not limited to bulk semiconductive material such as a semiconductive wafer, either alone or in assemblies comprising other materials thereon, and semiconductive material layers, either alone or in assemblies comprising other materials. A semiconductor device refers to a semiconductor substrate upon which at least one microelectronic device has been or is being batch fabricated.

Substrates are electroplated by contacting the substrate with the metal plating baths of the present invention and applying a current density for a period of time to deposit a metal layer on the substrate. The substrate typically functions as the cathode. The plating bath contains an anode, which may be soluble or insoluble. Potential is typically applied to the cathode. Sufficient current density is applied and plating performed for a period of time sufficient to deposit a metal layer, such as a copper layer, having a desired thickness on the substrate. For the plating of copper on en electronic device, suitable current densities, include, but are not limited to, the range of 1 to 250 mA/cm². Typically, the current density is in the range of 1 to 75 mA/cm² when the present invention is used to deposit copper in the manufacture of integrated circuits. Other current densities will be useful depending upon the particular metal to be deposited and the particular substrate being plated, the cross-linked polymeric leveling agent selected, as well as other considerations known to those skilled in the art. Such current density choice is within the abilities of those skilled in the art.

An advantage of the present invention is that overplating, particularly mounding, is reduced. Such reduced overplating means less time and effort is spent in removing metal, such as copper, during subsequent chemical-mechanical polishing processes, particularly in semiconductor manufacture. A further advantage of the present invention is that a wide range of apertures sizes, particularly vias having a diameter of < 100 nm and trenches having a width of 100 nm, may be filled within a single substrate. Thus, the present invention is particularly suitable to substantially filling variously sized apertures in a substrate, such as trenches and vias (including TSVs), each having a dimension (diameter or width) of < 100 nm. The apertures filled with copper according to the present invention may have a variety of aspect ratios, such as from to 10 or greater, and is particularly 3 to 8.

Electronic devices such as semiconductor devices, semiconductor packages, and printed circuit boards, are formed according to the present invention having substantially planar copper layers and filled features that are substantially free of added defects. By "substantially planar" copper layer is meant that the step height, i.e., the difference between areas of dense very small apertures and areas free of or substantially free of apertures, is less than 1 µm, preferably less than 0.75 µm, more preferably less than 0.6 µm, and even more preferably less than 0.1 µm. "Substantially free of added defects" refers to the leveling agent not increasing the number or size of defects, such as voids, in filled apertures as compared to control plating baths not containing such leveling agent. A further advantage of the present leveling agent is that a substantially planar metal layer may be deposited on a substrate having non-uniformly sized apertures, wherein the apertures are substantially free of added voids. "Non-uniformly sized apertures" refer to apertures having a variety of sizes in the same substrate.

A particular advantage of the present electroplating baths is that little doping of impurities may be observed in the copper layer up to the initial 1000 Å, or even up to the initial 1500 Å, of copper deposited. This allows for the filling of vias ("gap filling") with a very pure copper deposit in a dual damascene process used in integrated circuit manufacture. Particularly, the present invention provides a copper deposit, such as in a copper-filled aperture, having an average of ≤150 ppm of total impurities of carbon, nitrogen, halide, oxygen and sulfur in the deposit.

While the process of the present invention has been generally described with reference to semiconductor manufacture, it will be appreciated that the present invention may be useful in any electrolytic process where an essentially level or planar copper deposit is desired, and where metal filled features that are substantially free of voids are desired. Such processes include printed wiring board and integrated circuit manufacture. For example, the present plating baths may be useful for the plating of vias, pads or traces on a printed wiring board, as well as for bump plating on wafers. Other suitable processes include packaging and interconnect manufacture where suitable substrates include lead frames and interconnects.

Example 1: General Procedure. Polyethyleneimine (PEI) alkoxylates were prepared in a pressure reactor. Aqueous solutions of the PEI initiators (3 mL, 50 wt%) were added to glass insert tubes and the water was then removed by drying at 80 °C for 10 hr under reduced pressure. On the day of the experiment, a mixture of potassium hydride (16 mg) and tetrahydrofuran (2 mL) was added to each insert tube. The insert tubes were loaded into the pressure reactor and heated to 80 °C. 1,2-epoxybutane (BO) was then added in the specified amount in one injection and heated to 130 °C. Once the BO had been consumed as judged by a stabilization of reactor pressure, the specified amount of ethylene oxide (EO) was then added. Once the EO had been consumed, the reactor was cooled and vented. Residual catalyst residue was quenched with 1 M H₂SO₄ and the volatiles were removed under reduced pressure.

The alkoxylated polyethyleneimines in Table 1 were prepared according to the above procedure. "PEI Mw" refers to the weight average molecular weight of the starting polyethyleneimine in Daltons. "Wt Ratio" refers to the weight ratio of the total amount of epoxide to PEI. "Epoxide" refers to the particular epoxide used (BO = Butylene oxide, EO = Ethylene oxide); and "Mole Ratio" refers to the total moles of epoxide per mole of N-H group in the PEI backbone.

**Table 1**

| **Sample No.** | **PEI Mw** | **Wt Ratio (Total Epoxide to PEI)** | **Epoxide** | **Wt Ratio BO:PEI** | **Wt Ratio EO:PEI** | **Mole Ratio** |
|---|---|---|---|---|---|---|
| 1 | 2000 | 0.5:1 | BO:EO | 0.26 | 0.24 | 0.34 |
| 2 | 2000 | 1:1 | BO:EO | 0.53 | 0.49 | 0.69 |
| 3 | 25,000 | 0.5:1 | BO:EO | 0.26 | 0.24 | 0.37 |
| 4 | 25,000 | 1:1 | BO:EO | 0.53 | 0.49 | 0.73 |
| 5 | 50,000 | 0.5:1 | BO:EO | - | - | - |
| 6 | 750,000 | 0.5:1 | BO:EO | 0.26 | 0.24 | - |
| | | | | | | |
| Comparative 1 | 2000 | 5:1 | BO:EO | - | - | 3.4 |
| Comparative 2 | 2000 | 10:1 | BO:EO | - | - | 6.9 |
| Comparative 3 | 25000 | 5:1 | BO:EO | - | - | 3.7 |

Example 2: A copper electroplating bath was prepared by combining 60 g/L CuSO₄, 50 g/L 18N H₂SO₄, 50 ppm chloride ion (HCl used as source for chloride ions), 8 mL/L of a disulfide compound having sulfonic acid groups and a molecular weight of < 1000 as an accelerator, 7.5 mL/L of a tetrafunctional copolymer derived from addition of ethylene oxide and propylene oxide to ethylenediamine having a molecular weight of approximately 7500 and a EO/PO ratio of 1.8 as a suppressor, and 0.5 mg/L of a leveler compound from Example 1. Cyclic voltammetry measurements were carried out at 25 °C using a Parstat™ 2273 potentiostat. A rotating (1000 rpm) platinum disk electrode with an area of 0.126 cm² was used as the working electrode, Ag/AgCl with a 10% vol. H₂SO₄ bridge was used as the reference, and platinum wire was as the counter electrode. The electrodes were cleaned before each measurement by cycling in 10% vol. H₂SO₄ between -0.2 V and +1.6 V. Electrochemical measurements were taken at a scan rate of 50 mV/s. Four complete cycles were taken between - 0.2 V and 1.6 V, with the last cycle stored and analyzed using PowerSuite™ software. The data reported in Table 2 indicate the leveler sample from Example 1 and summarize the corresponding electrochemical polarization at 40 mA/cm² and integrated charge extracted from its cyclic voltammetry stripping peak under high mass transport conditions (1000 rpm). In Table 2, E = the polarization at 40 mA/cm² in millivolts (mV), and the Charge refers to the amount of charged stripped from the electrode reported in milliCoulombs (mC) to give a measure of how much copper was plated under the given set of conditions.

**Table 2**

| **Leveler Sample No.** | **E (mV)** | **Charge (mC)** |
|---|---|---|
| 1 | -121.99 | -24.68 |
| 2 | -104.31 | -28.9 |
| 3 | -72.42 | -40.03 |
| 4 | -63.13 | -43.62 |
| 5 | -60.12 | -44.65 |
| 6 | -63.51 | -44.87 |
| | | |
| Comparative 1 | -43.27 | -50.24 |
| Comparative 2 | -46.48 | -51.5 |
| Comparative 3 | -35.06 | -57.59 |

The data in Table 2 indicate that each of the inventive leveler samples has suppressive characteristics, meaning that each of the samples functions as a leveling agent in the copper electroplating bath. The absolute value of the charge in Table 2 is used as an indicator of the relative suppressive (or leveling) strength of the samples, with the smaller charge indicating that less copper is present and, therefore, the sample having greater suppressive strength (or leveling ability) than a sample with a relatively larger absolute charge value. As can be seen from these data, the leveler compounds of the invention have significantly more suppressive characteristics as compared to conventional alkoxylated polyethyleneimines having an average number of oxyalkylene units in the polyoxyalkylene of ≥ 1.5.

Example 3: Copper electroplating baths were prepared by combining 40 g/L CuSO₄, 30 g/L 18N H₂SO₄, 50 ppm chloride ion (HCl used as source for chloride ions), 6-8 mL/L of a disulfide compound having sulfonic acid groups and a molecular weight of < 1000 as an accelerator, 8-10 mL/L of a tetrafunctional copolymer derived from addition of ethylene oxide and propylene oxide to ethylenediamine having a molecular weight of approximately 7500 and a EO/PO ratio of 1.8 as a suppressor, 0.5-1.5 mg/L of a leveler compound from Example 1 and 5-10 mg/L of a reaction product of 4-phenylimidazole, 2,4-dimethylimidazole and 1,4-di(oxiran-2-yl)butane as a second leveler.

Copper plating experiments were performed in a Wafer Segment Plating (WSP) tool to simulate an actual plating tool. Patterned test wafer coupons (4 cm x 4 cm) were attached to a cylindrical polytetrafluoroethylene head of a rotating electrode (Pine Instruments) with secured conductive metal clamps. The rotation speed was set at 200 rpm and the deposition was carried out galvanostatically using commercially available test wafers, either Q-Cleave D (QCD) or 454 wafers. Each of these test wafers has different features. For example, QCD wafers contain trench row sections and pads (or squares or boxes) and 454 wafers contain damascene structures. For QCD wafer plating, 1 µm of copper film was deposited in steps as follows: 1000 Å at 7 mA/cm², 1000 Å at 10 mA/cm², and 8000 Å at 40 mA/cm². For 454 wafer plating, 75 Å of copper film was deposited at 7 mA/cm². Hot entry conditions were set to 0.3 V and 200 rpm.

Copper plated (1 µm thickness) QCD wafer coupons were evaluated using a Leica optical microscope to determine the presence of surface defects. The boxes were examined under 5x magnification and the trench row sections were examined under 10x magnification to characterize surface leveling. The boxes showed no surface defects, such as nodules, and the trench row sections showed no visible rows. When no rows are visible in the trench row sections, the leveling agent sample used was an effective leveling agent for copper electroplating.

Cross-sectional scanning electron micrograph (SEM) images were captured from the 454 coupons under 50,000x magnification to monitor gap filling in the damascene features (60 nm trenches with an aspect ratio of 5). The samples showed excellent gap filling (copper deposition in the trenches) with no void formation. Figure 1 is a SEM showing the gap filling ability of copper electroplating baths containing the present leveling agents, where the copper plating bath contained 8 mL/L of accelerator, 6 mL/L of suppressor, and 0.5 ppm of leveling agent Sample 2.

Example 4: The procedure of example 1 was repeated except that butylene oxide was replaced with propylene oxide (PO) to provide the alkoxylated polalkyleneimines listed in Table 3. Copper electroplating baths were then prepared according to Example 2 except that the alkoxylated polalkyleneimines from Table 3 were used as the levelers. Cyclic voltammetry measurements were carried out according to Example 2 and the results are reported in Table 3.

**Table 3**

| **Sample No.** | **PEI Mw** | **Wt Ratio (Total Epoxide to PEI)** | **Epoxide** | **E (mV)** | **Charge (mC)** |
|---|---|---|---|---|---|
| 7 | 2000 | 0.5:1 | PO:EO | -109.33 | -27.24 |
| 8 | 2000 | 1:1 | PO:EO | -99.79 | -30.75 |
| 9 | 25,000 | 0.5:1 | PO:EO | -78.75 | -37.98 |
| 10 | 25,000 | 1:1 | PO:EO | -66.62 | -42.39 |
| 11 | 50,000 | 0.5:1 | PO:EO | -56.43 | -46.4 |
| 12 | 750,000 | 0.5:1 | PO:EO | -64.76 | -44.29 |
| | | | | | |
| Comparative 4 | 2000 | 5:1 | PO:EO | -50.2 | -47.68 |
| Comparative 5 | 2000 | 10:1 | PO:EO | -53.16 | -50.1 |
| Comparative 6 | 750,000 | 10:1 | PO:EO | -41.27 | -55.86 |

The data in Table 3 indicate that each of the inventive leveler samples (samples 7-12) has suppressive characteristics, meaning that each of the samples functions as a leveling agent in the copper electroplating bath. As can be seen from these data, the leveler compounds of the invention have significantly more suppressive characteristics as compared to conventional alkoxylated polyethyleneimines having an average number of oxyalkylene units in the polyoxyalkylene radical of from 1.5 to 10. Specifically, Comparative 4, which has an average of about 3 alkylene oxide moieties per N-H group in the PEI backbone, has a charge of -47.68, whereas inventive Sample 7, which as an average of about 0.3 about alkylene oxide moieties per N-H group in the PEI backbone, has a charge of -27.24, indicating that Sample 7 has significantly more suppressive strength than Comparative 4.

Example 5: The general procedure of Example 1 was repeated except that only a single epoxide was used, either ethylene oxide (EO) or propylene oxide (PO), to provide the alkoxylated polalkyleneimines listed in Table 4. Copper electroplating baths were then prepared according to Example 2 except that the alkoxylated polalkyleneimines from Table 4 were used as the levelers. Cyclic voltammetry measurements were carried out according to Example 2 and the results are reported in Table 4.

**Table 4**

| **Sample No.** | **PEI Mw** | **Wt Ratio (Total Epoxide to PEI)** | **Epoxide** | **E (mV)** | **Charge (mC)** |
|---|---|---|---|---|---|
| 13 | 2000 | 0.5:1 | EO | -118.47 | -25.29 |
| 14 | 2000 | 1:1 | EO | -99.45 | -30.20 |
| 15 | 25,000 | 0.5:1 | EO | -77.59 | -38.37 |
| 16 | 50,000 | 0.5:1 | EO | -64.21 | -43.10 |
| 17 | 750,000 | 0.5:1 | EO | -69.00 | -42.07 |
| | | | | | |
| Comparative 7 | 750,000 | 5:1 | EO | -46.65 | -51.88 |
| | | | | | |
| 18 | 2000 | 0.5:1 | PO | -93.30 | -32.30 |
| 19 | 2000 | 1:1 | PO | -73.77 | -38.35 |
| 20 | 25,000 | 1:1 | PO | -47.22 | -51.41 |
| 21 | 50,000 | 0.5:1 | PO | -54.20 | -47.73 |
| 22 | 50,000 | 1:1 | PO | -48.15 | -50.73 |
| 23 | 750,000 | 0.5:1 | PO | -54.01 | -48.33 |
| | | | | | |
| Comparative 8 | 25,000 | 5:1 | PO | -42.07 | -53.46 |

The data in Table 4 indicate that each of the inventive leveler samples (samples 13-23) has suppressive characteristics, meaning that each of the samples functions as a leveling agent in the copper electroplating bath. As can be seen from these data, the leveler compounds of the invention have significantly more suppressive characteristics as compared to conventional alkoxylated polyethyleneimines having an average number of oxyalkylene units in the polyoxyalkylene radical of ≥ 1.5. Specifically, Comparative 7, which has an average of about 3 alkylene oxide moieties per N-H group in the PEI backbone, has a charge of -51.88, whereas inventive Sample 13, which as an average of about 0.3 about alkylene oxide moieties per N-H group in the PEI backbone, has a charge of -25.29, indicating that Sample 13 has significantly more suppressive strength than Comparative 7.

Example 6: The copper layer plated on a test 454 wafer coupon sample (4 cm x 4 cm) from a plating bath of Example 3 containing 8 mL/L of accelerator, 6 mL/L of suppressor, and 0.6 mg/L of Sample 7 as the leveling agent was evaluated by time-of-flight SIMS to determine the average levels of impurities in the copper film. The average impurity levels was found to be 117 ppm.

Example 7: The procedure of Example 6 was repeated using copper plating baths containing different levelers. Copper plating bath A (comparative) contained 0.75 mg/L of a commercially available benzylated polyethyleneimine as a first leveler and 5 mg/L of a reaction product of 4-phenylimidazole, 2,4-dimethylimidazole and 1,4-di(oxiran-2-yl)butane as a second leveler. Copper plating bath B contained 0.75 mg/L Sample 2 as a first leveler and 5 mg/L of a reaction product of 4-phenylimidazole, 2,4-dimethylimidazole and 1,4-di(oxiran-2-yl)butane as a second leveler. The results are reported in Table 5, and show that the present levelers provide significantly reduced impurity incorporation in the copper film.

**Table 5**

| **Impurity:** | **C** | **O** | **S** | **Cl** | **N** | **Total** |
|---|---|---|---|---|---|---|
| **Bath A** (Comparative) | 65 ppm | 12 ppm | 29 ppm | 83 ppm | 1 ppm | 192 ppm |
| **Bath B** | 42 ppm | 15 ppm | 22 ppm | 65 ppm | 1 ppm | 146 ppm |

Example 8: A copper electroplating bath was prepared by combining 40 g/L CuSO₄, 30 g/L 18N H₂SO₄, 50 ppm chloride ion (HCl used as source for chloride ions), 8 mL/L of a disulfide compound having sulfonic acid groups and a molecular weight of < 1000 as an accelerator, 5 mL/L of a tetrafunctional copolymer derived from addition of ethylene oxide and propylene oxide to ethylenediamine having a molecular weight of approximately 7500 and a EO/PO ratio of 1.8 as a suppressor, 0.5 mg/L of Sample 13 from Example 5 as a leveler compound. A copper layer was plated on a test 454 wafer coupon sample (4 cm x 4 cm) according to the procedure described in Example 3. A cross-sectional SEM image (Fig. 2) captured from the 454 coupon under 50,000x magnification showed good gap filling (copper deposition in the 60 nm trenches with an aspect ratio of 5) with no void formation.

## Claims

1. A composition comprising: a source of copper ions; an electrolyte; and an alkoxylated polyalkyleneimine additive comprising a polyalkyleneimine backbone having a molecular weight of 200 to 1,000,000 g/mol and nitrogen atoms substituted with a polyoxyalkylene radical having an average number of oxyalkylene units in the polyoxyalkylene radical of from 0.2 to 1.49.

2. The composition of claim 1 wherein the average number of oxyalkylene units in the polyoxyalkylene radical is from 0.3 to 1.45.

3. The composition of claim 1 wherein the polyoxyalkylene radial comprises units of ethylene oxide, propylene oxide, butylene oxide, and mixtures thereof.

4. The composition of claim 1 wherein the polyoxyalkylene radial comprises a mixture of ethylene oxide and butylene oxide units.

5. The composition of claim 4, wherein the ratio of ethylene oxide to butylene oxide is from 1:9 to 9:1.

6. The composition of claim 1 wherein the alkoxylated polyalkyleneimine has the formula: (E¹2N-R)ₐ(N(E¹)-R)_{b}(N(A¹)-R)₄N(A²)-R)_{d}NE¹₂; wherein R is a C₂₋₆alkanediyl; A¹ is a continuation of the polyalkyleneimine backbone; A² is chosen from alkyl, alkenyl, alkynyl, alkaryl and mixtures thereof; E¹ is a polyoxyalkylene unit of the formula -(R¹O)ₚR²; each R¹ is independently chosen from ethanediyl, 1,2-propanediyl, (2-hydroxymethyl)ethanediyl, 1,2-butanediyl, 2,3-butanediyl, 2-methyl-1,2-propanediyl, 1-pentanediyl, 1,2-pentaediyl, 2-methyl-1,2-butanediyl, 3-methyl-1,2-butanediyl, 2,3-hexanediyl, 3,4-hexanediyl, 2-methyl-1,2-pentanediyl, 2-ethyl-1,2-butanediyl, 3-methyl-1,2-pentanediyl, 1,2-decanediyl, 4-methyl-1,2-pentanediyl, and (2-phenyl)ethanediyl; each R₂ is independently chosen from H, alkyl, alkenyl, alkynyl, alkaryl, and aryl; p is a number from 0.2 to 1.49; a, b, c and d are integers and a + b + c + d = 10 to 24000.

7. The composition of claim 6 wherein R is chosen from ethanediyl, 1,2-propanediyl, and mixtures thereof.

8. The composition of claim 6 wherein R² = H.

9. The composition of claim 6 where p = 0.3 to 1.45.

10. The composition of claim 6 where d= 0.

11. The composition of claim 1 further comprising one or more accelerators, suppressors, levelers, halide ions, defoaming agents and sources of alloying metal ions.

12. The composition of claim 1 wherein the alkoxylated polyalkyleneimine is present in the composition in a concentration of ≤ 1 ppm.

13. The composition of claim 12 wherein the alkoxylated polyalkyleneimine is present in the composition in a concentration of 0.0001 to 1 ppm.

14. A method of electrodepositing copper comprising: providing an electronic device substrate to be plated with copper; contacting the substrate with the composition of claim 1; and applying sufficient current density to deposit a layer of copper on the substrate.

15. The method of claim 14 wherein the electronic device substrate comprises apertures having a dimension of ≤100 nm.
